# EUROPÄISCHE PATENTSCHRIFT

(11) **EP 2 382 520 B1**
(45) Veröffentlichungstag und Bekanntmachung des Hinweises auf die Patenterteilung: **26.02.2014**
(21) Anmeldenummer: 09749014.8
(22) Anmeldetag: 04.11.2009
(51) Int. Cl.: G05D 16/20, F15B 13/04, F15B 13/043, F16D 48/02

(54) **PROPORTIONAL-DRUCKREGELVENTIL UND SEINE VERWENDUNG FÜR HYDRAULISCH BETÄTIGBARE KUPPLUNGEN**
PROPORTIONAL PRESSURE CONTROL VALVE AND ITS USE FOR HYDRAULICALLY OPERABLE COUPLING
SOUPAPE DE RÉGULATION DE PRESSION PROPORTIONNELLE ET SON UTILISATION POUR CONNECTION HYDRAULIQUE

(30) Priorität: 28.01.2009 DE 102009006445
(43) Veröffentlichungstag der Anmeldung: 02.11.2011
(73) Patentinhaber: Hydac Fluidtechnik GmbH, 66273 Sulzbach/Saar (DE)
(72) Erfinder: BILL, Markus, 66265 Heusweiler (DE); BRUCK, Peter, 66484 Althornbach (DE); SCHNEIDER, Gerd, 66763 Dillingen (DE)
(74) Vertreter: Bartels, Martin Erich Arthur
(86) Internationale Anmeldenummer: PCT/EP2009/007882
(87) Internationale Veröffentlichungsnummer: WO 2010/085991

(56) Entgegenhaltungen:
- WO-A1-2007/065566
- DE-A1- 10 025 772
- DE-A1- 10 325 178
- US-B1- 6 286 535

## Beschreibung

Die Erfindung betrifft ein Proportional-Druckregelventil mit einem Ventilgehäuse, das mindestens drei fluidführende Anschlüsse aufweist, insbesondere in Form eines Pumpen-, eines Nutz- und eines Tank-Anschlusses gemäß der Merkmalsausgestaltung des Oberbegriffes des Patentanspruches 1. Die Erfindung betrifft ferner die Verwendung eines solchen Proportional-Druckregelventils für hydraulisch betätigbare Kupplungen gemäß der Merkmalsausgestaltung des Oberbegriffes des Patentanspruches 12.

Für Anwendungsfälle, wo große Volumenströme gesteuert werden, werden bevorzugt vorgesteuerte Druckregelventile anstelle von direkt gesteuerten Ventilen eingesetzt. Ein hoher Volumenstrom bedeutet sowohl große Öffnungsquerschnitte des Ventils bei großen Hüben als auch große Strömungskräfte, welche der Magnetkraft des betätigenden Magnetsystems als Störgröße entgegenwirken. Um diesen Problemen abzuhelfen, müsste das Magnetsystem bei direkt gesteuerten Ventilen entsprechend groß dimensioniert werden.

Im Stand der Technik sind daher für solche Anwendungsfälle Ventile bekannt, die über eine hydraulische Vorsteuerung verfügen, siehe DE 103 25 178 A1. Diese bekannte Lösung zeichnet sich gegenüber anderen zum Stand der Technik gehörenden Lösungsvorschlägen, die durch die US 6,286,535 B1 bekannt sind, dadurch aus, dass das Ventil in der Lage ist, bei unbetätigtem Magnetsystem am Nutzanschluss einen Druckwert von 0 bar einzustellen. Bei den im genannten US-Patent offenbarten Ventilen ist dies nicht möglich, weil entsprechend ihrer Bauweise der Regelkolben bei nicht betätigtem Magnetsystem mittels einer eingespannten Druckfeder auf seine Endlage zurückgeführt wird. Aufgrund dieser konstruktiven Gestaltung besitzen diese Ventile daher bei nicht vorhandenem elektrischen Steuersignal des Magnetsystems immer noch ein Druckniveau, welches der Kraft der eingespannten Feder entspricht.

Bei dem Proportional-Druckregelventil nach der DE 103 25 178 A1 wird für den Erhalt eines Druckwertes von 0 bar am Nutzanschluss bei unbetätigtem Magnetsystem zur Bildung der hierfür notwendigen fluidführenden Verbindung der Regelkolben mit einem inneren Verbindungskanal versehen, der vor seiner Einmündung in eine Vorsteuerkammer des Ventils eine Blende aufweist, welcher ein Strömungsdiffusor nachgeschaltet und ein Schutzsieb vorgeschaltet sind. Dadurch ergibt sich bei der bekannten Lösung für den Regelkolben nicht nur eine verhältnismäßig aufwendige Bauweise, sondern auch eine beträchtliche Baulänge, wodurch wiederum eine entsprechende Baulänge des Ventilgehäuses bedingt ist.

Zwar ist bei einem gattungsgemäßen als Baukastensystem ausgelegten Ventil nach der WO 2007/065566 A1, bei dem innerhalb eines Ventilgehäuses zum wahlweisen Verbinden eines Pumpenanschlusses mit dem Nutzanschluss A sowie des Nutzanschlusses A mit einem Tankanschluss ein Regelkolben längs verfahrbar geführt ist, und eine fluidführende Verbindung zwischen dem Pumpenanschluss P und einer Vorsteuerkammer eines Vorsteuerventiles vorhanden ist, sowie das Vorsteuerventil mittels eines Magnetsystems, insbesondere eines Proportional-Magnetsystems von einer nicht geschlossenen in eine geschlossene Stellung und umgekehrt ansteuerbar ist, bereits vorgeschlagen worden als Teil einer fluidführenden Verbindung zur Vorsteuerkammer eine innerhalb der Wand des Ventilgehäuses in axialer Richtung verlaufende Bohrung einzusetzen; allein bei dieser bekannten Lösung mündet die innerhalb des Ventilgehäuses in axialer Richtung verlaufende Bohrung in einen im Ventilgehäuse radial verlaufenden Tankanschluss aus, so dass insoweit eine kompakte Ventilbauweise erreicht sein mag, jedoch kommt keine permanente Fluidverbindung der axialen Bohrung mit dem Pumpenanschluss zustande und zwar unabhängig von der Verfahrstellung des Regelkolbens. Demgemäß lässt sich mit dieser bekannten Lösung bei unbetätigtem Magnetsystem am Nutzanschluss auch kein Druckwert von 0 bar einstellen, was aber notwendig ist, um solche Ventile von deren Funktionssicherheit her in hohem Maße auszulegen, um diese dergestalt vielfältigst insbesondere im Bereich hydraulischer Kupplungssysteme einsetzen zu können.

Im Hinblick auf diesen Stand der Technik liegt der Erfindung die Aufgabe zugrunde, ein Proportional-Druckregelventil, das entsprechend der Lösung gemäß DE 103 25 178 A1 am Nutzanschluss auf einen Restdruck von 0 bar einstellbar ist, dahingehend weiterzuentwickeln, dass es sich demgegenüber durch eine einfachere und kompaktere Bauweise auszeichnet. Der Erfindung liegt ferner die Aufgabe zugrunde, ein solches Ventil für hydraulisch betätigbare Kupplungen verwenden zu können.

Erfindungsgemäß ist diese Aufgabe durch ein Proportional-Druckregelventil gelöst, das die Merkmale des Patentanspruches 1 in seiner Gesamtheit aufweist bzw. durch die Verwendung eines solchen Proportional-Druckregelventiles für Kupplungsaufgaben gemäß der Merkmalsausgestaltung des Patentanspruches 12.

Eine wesentliche Besonderheit der Erfindung besteht gemäß dem kennzeichnenden Teil des Patentanspruches 1 darin, die in axialer Richtung im Ventilgehäuse verlaufende Bohrung von einer den Pumpenanschluss bildenden Radialbohrung des Gehäuses ausgehen zu lassen, wobei das über die fluidführende Verbindung zugeführte Fluid über einen Verteilerraum im Ventilgehäuse bei entsprechender Ansteuerung des Vorsteuerventi les zur Tankseite abströmen kann. Dadurch, dass die fluidführende Verbindung zur Vorsteuerkammer praktisch vollständig in das Ventilgehäuse integriert ist, ist eine einfache und kompakte Bauweise für das erfindungsgemäße Ventil gewährleistet. Das über den Verteilerraum im Ventilgehäuse zur Tankseite abströmende Fluid ermöglicht, dass sich in der Vorsteuerkammer kein Fluiddruck aufbaut, so dass sich dann jedenfalls am Nutzanschluss ein Druckwert von 0 bar einstellen kann, so dass sich mit einem solchen konzipierten Ventil auch hohe Volumenströme beherrschen lassen, ohne das Magnetsystem entsprechend groß dimensionieren zu müssen. Bevorzugt stellt sich am Nutzanschluss dabei ein Druckwert von 0 bar ein, wenn das Magnetsystem unbetätigt, also das Vorsteuerventil bevorzugt im nicht geschlossenen Zustand ist.

In weiterer vorteilhafter Ausgestaltung kann erfindungsgemäß der Nutzanschluss durch die koaxiale, endseitige Öffnung des Ventilgehäuses gebildet sein. Dadurch eröffnet sich die besonders vorteilhafte Möglichkeit der weiteren Verringerung der Baulänge, weil, in Längsrichtung des Ventilgehäuses versetzt, an diesem lediglich zwei radial durchströmte Anschlüsse durch Radialbohrungen gebildet sein müssen, nämlich Pumpenanschluss und Tankanschluss, so dass der Regelkolben eine entsprechend geringere Anzahl umfänglicher Steuerkanten aufzuweisen braucht, was wiederum eine Vereinfachung und eine Verringerung der erforderlichen Baulänge bedingt.

In vorteilhafter Weise kann der Regelkolben als bewegbare Begrenzung der Vorsteuerkammer eine in einer Radialebene liegende, geschlossene, ebene Kolbenfläche besitzen.

Dabei kann die Anordnung vorteilhafterweise so getroffen sein, dass ein im Ventilgehäuse stationär angeordneter Ventilkörper des Vorsteuerventils eine weitere, feststehende Begrenzung der Vorsteuerkammer und den vom Pumpenanschluss entfernten Endabschnitt der fluidführenden Verbindung zur Vorsteuerkammer bildet.

Bei derartigen Ausführungsbeispielen kann die Anordnung so getroffen sein, dass der Endabschnitt der fluidführenden Verbindung einen radialen Kanal beinhaltet, der sich zwischen einer inneren, koaxialen Bohrung des Ventilkörpers und einem Ringspalt erstreckt, der zwischen der Umfangsfläche des Ventilkörpers und dem Ventilgehäuse einen Filtrationsspalt bildet, in den das Ende der radialen Bohrung des Ventilgehäuses mündet. Diese Bauweise trägt ebenfalls zu einer kompakten Bauform bei, weil der Einbau des Schutzfilters für das Vorsteuerfluid keine zusätzliche axiale Baulänge erforderlich macht.

Weitere vorteilhafte Ausgestaltungen des erfindungsgemäßen Proportional-Druckregelventils sind Gegenstand der übrigen Unteransprüche 6 bis 11.

Da, wie erwähnt, ein Ventilsystem geschaffen ist, bei dem sichergestellt werden kann, dass am Nutzanschluss sich bei unbetätigtem Magnetsystem ein Druckwert von 0 bar einstellt, eignet sich die Erfindung insbesondere für einen Einsatz bei hydraulisch betätigten Kupplungen, für deren Funktionssicherheit es wesentlich ist, dass sich beim Lösen der Kupplung die sich in Eingriff befindlichen Kupplungs- oder Lamellenpakete sich sicher voneinander trennen. Gemäß dem Patentanspruch 12 ist Gegenstand der Erfindung daher auch die Verwendung des erfindungsgemäßen Ventils für hydraulisch betätigbare Kupplungen.

Nachfolgend ist die Erfindung anhand von in der Zeichnung dargestellten Ausführungsbeispielen im Einzelnen erläutert. Es zeigen:
- Fig. 1: teilweise in Ansicht, teilweise im Längsschnitt ein Proportional-Druckregelventil gemäß dem Stand der Technik;
- Fig. 2 bis 4: ebenfalls teils in Ansicht und teils im Längsschnitt gezeichnete Darstellungen eines ersten Ausführungsbeispiels des erfindungsgemäßen Proportional-Druckregelventils in verschiedenen Schalt- oder Betätigungsstellungen;
- Fig. 5: einen gegenüber Fig. 2 bis 4 in etwas kleinerem Maßstab gezeichneten Längsschnitt eines zweiten Ausführungsbeispieles des erfindungsgemäßen Proportional-Druckregelventils;
- Fig. 6: einen gegenüber Fig. 5 vergrößert gezeichneten Teillängsschnitt lediglich des in Fig. 5 mit strichpunktierter Kreislinie bezeichneten Bereiches;
- Fig. 7: in der Art einer vereinfachten Schaltdarstellung die Verwendung eines erfindungsgemäßen Proportional-Druckregelventiles für den Einsatzfall bei einer Lamellenkupplung und
- Fig. 8: den Ablauf eines Kupplungsspieles für eine Kupplungs-Ventilanordnung gemäß der hydraulischen Anordnung von Fig. 7.

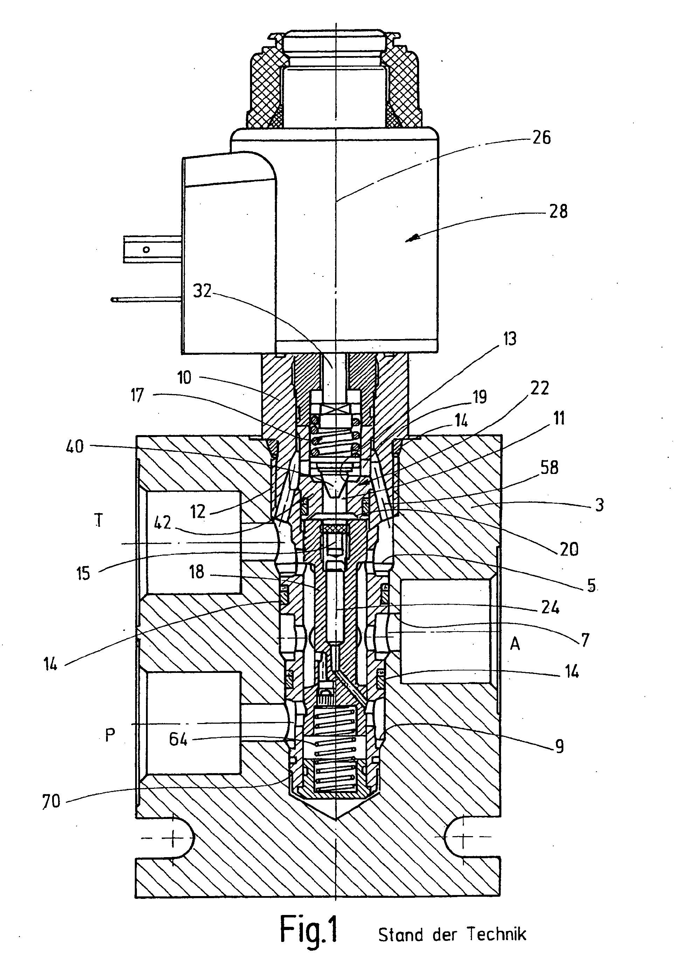

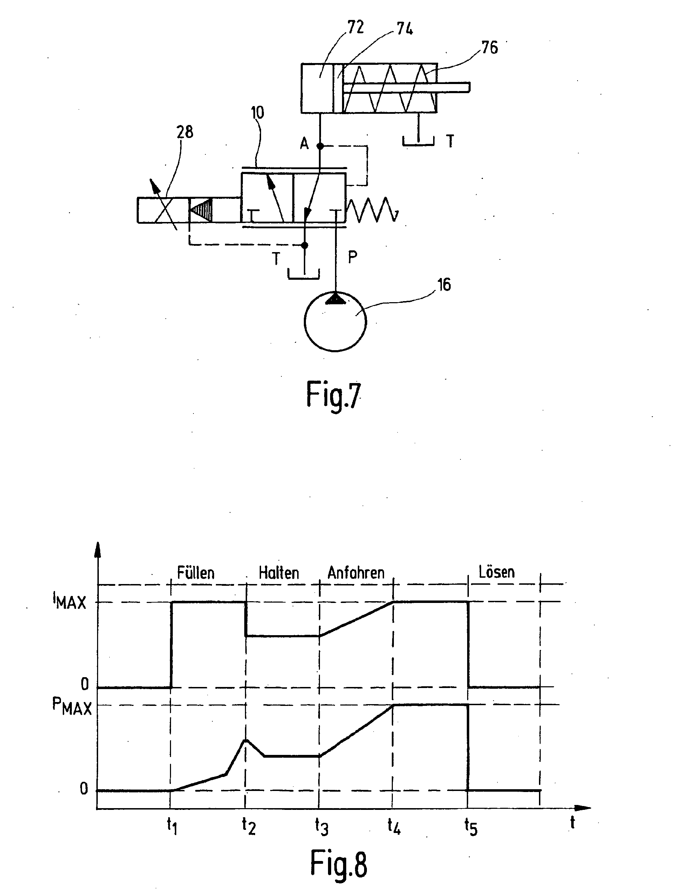

Fig. 1 zeigt ein Proportional-Druckregelventil des Standes der Technik entsprechend DE 103 25 178 A1. Das Ventil weist, in der Art einer Einschraubpatrone ausgebildet, ein Ventilgehäuse 10 auf, das sich über eine Einschraubstrecke 12 in ein nicht näher dargestelltes Maschinenteil, beispielsweise in Form eines Ventilblockes 3 einschrauben lässt. Für die abgedichtete Verbindung mit dem Ventilblock 3 weist das Ventilgehäuse 10 außenumfangsseitig entsprechend Dichtringe 14 auf, die in zugehörigen Aufnahmen sitzen. Das Ventilgehäuse 10 weist, in Blickrichtung auf die Fig. 1 gesehen, von oben nach unten Radialbohrungen 5 für einen Tankanschluss T, Radialbohrungen 7 für einen Nutzanschluss A sowie Radialbohrungen 9 für einen Pumpenanschluss P für eine Hydropumpe 16 (vgl. Fig. 7) auf. Des Weiteren ist innerhalb des Ventilgehäuses 10 zum wahlweisen Verbinden des Pumpenanschlusses P mit dem Nutzanschluss A sowie des Nutzanschlusses A mit dem Tankanschluss T ein Regelkolben 18 längs verfahrbar geführt.

Zum Herstellen einer fluidführenden Verbindung zwischen dem Pumpenanschluss P und einer Vorsteuerkammer 20 eines als Ganzes mit 22 bezeichneten Vorsteuerventils ist der Regelkolben 18 mit einem zur Längsachse 26 koaxialen Verbindungskanal 24 versehen, der in seinem in Fig. 1 unteren Endabschnitt abgekröpft zu einer Radialbohrung 9 des Pumpenanschlusses P führt und in seinem oberen Endabschnitt über ein Austrittssystem 15 mit der Vorsteuerkammer 20 verbunden ist. Das Austrittssystem 15 beinhaltet eine Blende, der in Fluidströmungsrichtung ein Schutzsieb vorgeschaltet und ein sogenannter Diffusor nachgeschaltet sind, welch letzterer vorrangig dazu dient, den gerichteten Ölstrahl, der aus der Blende ausströmt, abzulenken, damit dieser nicht direkt auf das bewegbare Schließteil 40 des Vorsteuerventiles 22 trifft.

Das Vorsteuerventil 22 weist einen stationären Ventilkörper 42 auf, in dem eine innere, koaxiale Bohrung 11 einerseits zur Vorsteuerkammer 20 hin offen ist und andererseits am Öffnungsrand einen Sitz 13 für das bewegliche Schließteil 40 des Vorsteuerventiles 22 bildet. Dieses ist über ein als Ganzes mit 28 bezeichnetes Magnetsystem, insbesondere in Form eines Proportional-Magnetsystemes, ansteuerbar. Ist dieses bestromt, wird sein Betätigungsstößel 32 in der Figur nach unten bewegt, wodurch das Schließteil 40 über eine Federanordnung 17 mit einer von der Stärke der Bestromung des Magnetsystems 28 abhängigen Schließkraft gegen den Ventilsitz 13 gedrückt wird, um das Vorsteuerventil 22 zu schließen.

Bleibt das Proportional-Magnetsystem 28 unbestromt, kann vom Nutzanschluss A Hydraulikmedium (Öl) zum Tankanschluss T fließen. Bei diesem Ventilzustand ist mithin das Vorsteuerventil 22 geöffnet, und der Regelkolben 18 ist auf seinen oberen Hubanschlag gegen die untere Seite des Ventilkörpers 42 gefahren. Bei dieser Schaltstellung fließt das Öl vom Pumpenanschluss P durch den Regelkolben 18 hindurch zur Vorsteuerkammer 20 und von dort über das geöffnete Vorsteuerventil 22 zu einem Verteilerraum 19, aus dem es über Kanäle 58 zum Tankanschluss T abströmt. Dieser Volumenstrom kann als Vorsteuerölstrom oder Leckage definiert werden.

Bei einer Strombeaufschlagung des Magnetsystems 28 drückt das Schließteil 40 auf den Ventilsitz 13 und unterbricht dabei den Volumenstrom. Die Vorsteuerkammer 20 füllt sich somit mit dem Hydraulikmedium auf, wodurch der Druck in dieser Kammer ansteigt. Dieser ansteigende Druck wirkt auf die obere Stirnseite des Regelkolbens 18 ein und bewegt diesen in Richtung des unteren Hubanschlages 70, und zwar gegen die sich komprimierende Druckfeder 64. Der Druck in der Vorsteuerkammer 20 entspricht dann dem eingeregelten Druck.

Wenn durch die Bestromung des Magnetsystems 28 der Schließdruck des Schließteiles 40 am Sitz 13 des Ventilkörpers 42 das Vorsteuerventil 22 schließt, steigt der Druck in der Vorsteuerkammer 22 auf einen Druckwert an, bei dem der Regelkolben 18 gegen die Hauptkolbenfeder 64 in der Figur nach unten bewegt wird, bis eine Stellung erreicht ist, in der der Verbraucheranschluss A mit dem Pumpenanschluss P verbunden ist. Wenn der geregelte Druck erreicht ist, ist der Regelkolben 18 derart verschoben, dass die Verbindung zwischen dem Pumpenanschluss P und dem Nutzanschluss A angedrosselt wird. Der Regelkolben 18 verschiebt sich in eine Position, bei der die beiden Kraftniveaus sich im Gleichgewicht zueinander befinden und definiert dergestalt ein Öffnungsfenster zwischen dem Pumpenanschluss P und dem Nutzanschluss A. Es stellt sich mithin ein Druck am Nutzanschluss A ein, der im direkten Zusammenhang zu dem elektrischen Steuersignal des Magnetsystems 28 steht.

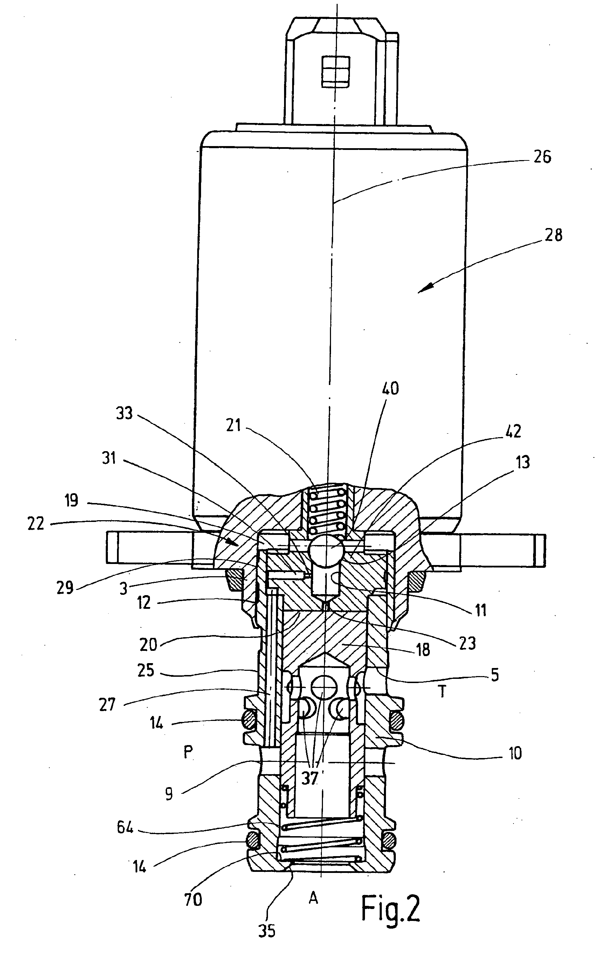

Die Fig. 2 bis 4 verdeutlichen ein erstes Ausführungsbeispiel des erfindungsgemäßen Proportional-Druckregelventils. Teile, die solchen des Ventils von Fig. 1 entsprechen, sind mit den gleichen Bezugszahlen wie in Fig. 1 bezeichnet. Der nicht dargestellte Stößel des Magnetsystemes 28 wirkt über eine Vorsteuerfeder 21 auf das durch eine Kugel gebildete Schließteil 40 des Vorsteuerventils 22 ein. Wie bei der bekannten Lösung gemäß Fig. 1 wirkt das Schließteil 40 mit einem Ventilsitz 13 zusammen, der sich am Öffnungsrand einer inneren, koaxialen Bohrung 11 eines stationären Ventilkörpers 42 befindet. Die vom Ventilsitz 13 abgekehrte Unterseite des Ventilkörpers 42 bildet die feststehende Begrenzung der Vorsteuerkammer 20 und den oberen Hubanschlag des Regelkolbens 18, dessen obere, ebene Kolbenfläche die bewegbare Begrenzung der Vorsteuerkammer 20 bildet. Der Innenraum der koaxialen inneren Bohrung 11 des Ventilkörpers 42 ist über eine Dämpfungsblende 23 mit der Vorsteuerkammer 20 in Fluidverbindung. Diese Blende 23 bildet den Endteil der fluidführenden Verbindung zwischen Pumpenanschluss P und Vorsteuerkammer 20. Der Hauptteil der fluidführenden Verbindung ist durch eine in der Wand des Ventilgehäuses 10 ausgebildete Axialbohrung 27 gebildet, die ihren Anfang an einer Radialbohrung 9 des Pumpenanschlusses P hat. Von hier führt die Axialbohrung 27 zum Außenümfang des stationären Ventilkörpers 42, wo die Axialbohrung 27 in einen Ringspalt 29 übergeht. Dieser bildet einen Filtrationsspalt zwischen dem Ende der Axialbohrung 27 und einem radialen Kanal 31, der im Ventilkörper 42 über eine Steuerölblende 33 zur inneren koaxialen Bohrung 11 führt, von wo die Fluidverbindung über die Dämpfungsblende 23 zur Vorsteuerkammer 20 hin vervollständigt wird.

Fig. 2 zeigt einen Schaltzustand, bei dem das Magnetsystem 28 nicht bestromt ist, das Vorsteuerventil 22 demgegenüber nicht geschlossen ist und sich somit in der Vorsteuerkammer 20 kein Fluiddruck aufbaut, weil das über die fluidführende Verbindung 27, 29, 31, 33 zugeführte Fluid über den Verteilerraum 19 zur Tankseite abströmen kann. Demgemäß befindet sich der Regelkolben 18 unter Einfluss der Feder 64 in der oberen Endstellung, wo er am oberen Hubanschlag, d. h. der Unterseite des Ventilkörpers 42 anliegt. Da beim erfindungsgemäßen Ventil lediglich Tankanschluss T und Pumpenanschluss P durch Radialbohrungen 5 bzw. 9 gebildet sind, während der Nutzanschluss A durch die koaxiale, endseitige Öffnung 35 des Gehäuses 10 gebildet ist, sind bei der Schaltstellung von Fig. 2 der Nutzanschluss A und der Tankanschluss T miteinander verbunden, nämlich in der Weise, dass der Regelkolben 18 einen zur Öffnung 35 des Ventilgehäuses 10 hin offenen Innenraum besitzt, aus dem Fluid über Durchgänge 37 in der Wand des Kolbens 18 zum Tankanschluss T austreten kann.

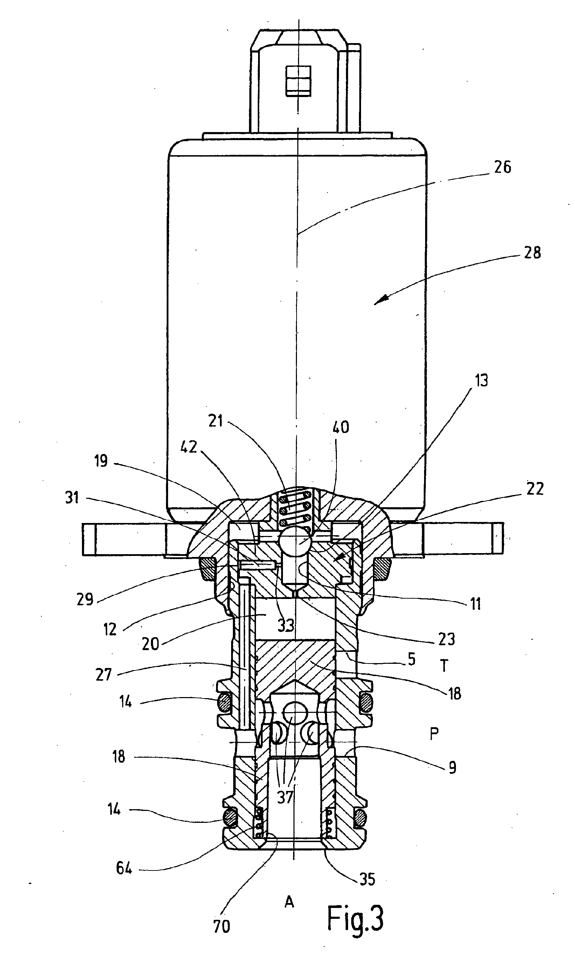

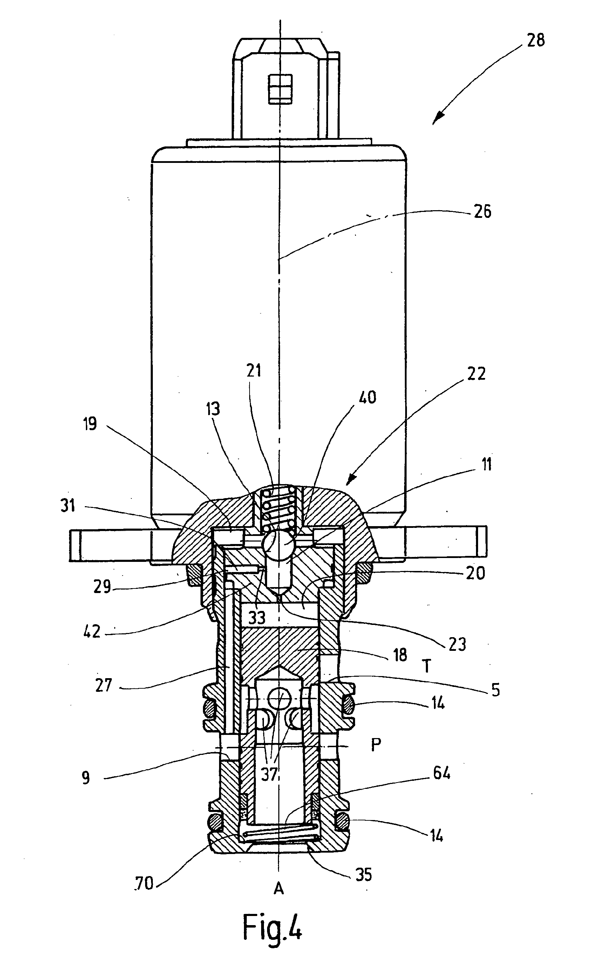

Die Fig. 3 und 4 zeigen Schaltzustände in Abhängigkeit der Bestromung des Magnetsystems 28. Dabei zeigt die Fig. 3 den Schaltzustand, bei dem durch Bestromen des Magnetsystems 28 über die Feder 21 das Schließteil 40 an den Ventilsitz 13 gedrückt ist, so dass in der Vorsteuerkammer 20 ein Druck aufgebaut ist, der den Regelkolben 18 an seinen unteren Hubanschlag 70 verschoben hat. Wie ersichtlich sind bei dieser Kolbenstellung Pumpenanschluss P und Nutzanschluss A miteinander verbunden, wobei, wie aus Fig. 3 ebenfalls ersichtlich ist, große Öffnungsquerschnitte zwischen Innenraum des Regelkolbens 18 und den Radialbohrungen 9 gebildet sind, so dass bei einem Einsatz zur Betätigung eines Kupplungszylinders eine schnelle Füllung erreicht wird.

Bei am Nutzanschluss A erreichtem Fülldruck des Verbrauchers, beispielsweise des Kupplungszylinders, und einer dadurch am Kolben 18 wirkenden Kraft wird dieser in der Figur nach oben verschoben, siehe Fig. 4, bis die Verbindung vom Pumpenanschluss P zum Nutzanschluss A angedrosselt oder völlig unterbunden wird oder, wie ebenfalls in Fig. 4 gezeigt, Nutzanschluss A und Tankanschluss T miteinander in Verbindung kommen, wobei sich eine Kolbenlage einstellt, bei der sich der Kolben im Kräftegleichgewicht befindet. Die gezeigte Ventilbauweise zeichnet sich durch eine hohe Dynamik und niedrigen Druckverlust aus, wodurch bei einem Einsatz zur Kupplungsbetätigung eine schnelle Befüllung mit Öl und eine schnelle Entleerung der Kupplung gewährleistet sind. Die Erfindung ist für derartige Anwendungsfälle auch deshalb besonders gut geeignet, weil im unbestromten Zustand des Magnetsystems 28 der Nutzanschluss A vollständig entlastet ist.

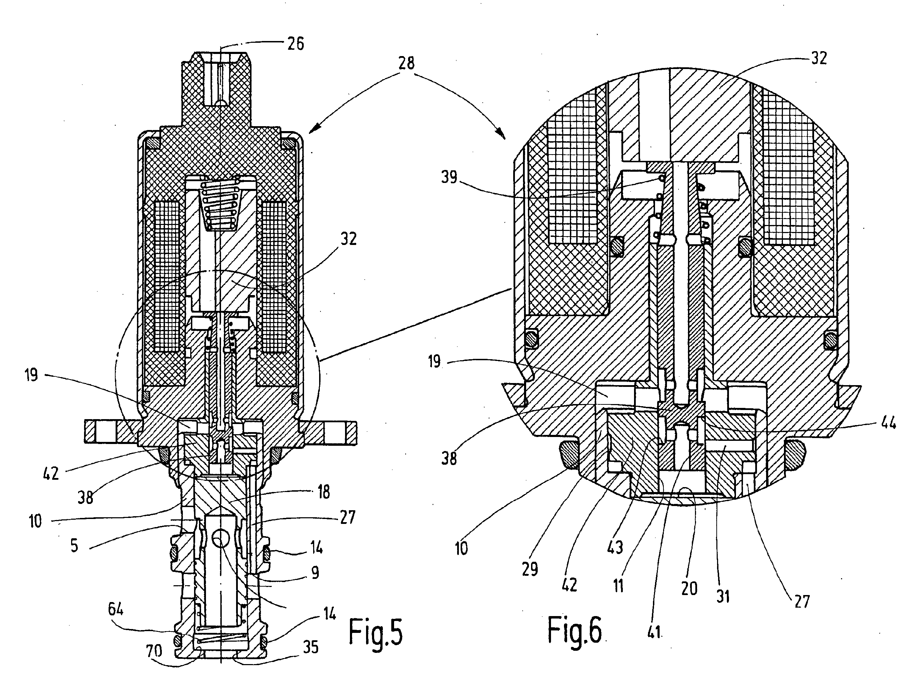

Ein zweites, abgewandeltes Ausführungsbeispiel des erfindungsgemäßen Ventils ist in Fig. 5 und 6 gezeigt. Bei dem zuerst beschriebenen Beispiel der Figuren 2 bis 4 ist das Ventil mit einer gewissen Leckage behaftet, weil in fast jedwedem Betriebszustand ein Steuerölstrom permanent zum Tank abfließt. Zwar hält die Steuerölblende 33 diese Leckage auf einem geringen Wert, trotzdem ist es sinnvoll, die Leckageverluste zu verringern. Bei dem Ausführungsbeispiel von Fig. 5 und 6 ist zu diesem Zweck die Vorsteuerung in der Weise gestaltet, dass anstelle eines Sitzventiles mit federbelastetem Schließteil ein direkt gesteuerter Druckregler in die Vorsteuerung integriert ist. Dabei ist die fluidführende Verbindung, wie beim zuvor beschriebenen Ausführungsbeispiel, im Anfangsteil durch die in der Wand des Ventilgehäuses 10 verlaufende Axialbohrung 27 gestaltet, die über den umfänglichen Ringspalt 29 des stationären Ventilkörpers 42 und über einen darin befindlichen Radialkanal 31 zur inneren koaxialen Bohrung 11 im Ventilkörper 42 führt. Innerhalb der inneren Bohrung 11 ist ein Ventilkolben 38 längs verschiebbar geführt, der über eine Rückstellfeder 39 kraftschlüssig am Stößel 32 des Magnetsystems 28 gehalten und bei Bestromung des Magnetsystems 28 in der Zeichnung nach unten verschiebbar ist. Der Ventilkolben 38 weist eine zur Vorsteuerkammer 20 offene Bohrung 41 und mit dieser in Verbindung stehende umfängliche Steuerkanten 43, 44 auf, so dass, je nach Axialposition des Ventilkolbens 38 der radiale Kanal 31, und damit die fluidführende Verbindung zum Pumpenanschluss P, mit der Vorsteuerkammer 20 verbunden oder abgesperrt ist. In der Position, in der der radiale Kanal 31 abgesperrt ist, wird die Vorsteuerkammer 20 über die axiale Kolbenbohrung 41 und die Steuerkante 44 zum Verteilerraum 19 und somit zum Tank geöffnet. Eine direkte Verbindung vom Pumpenanschluss P zum Tankanschluss T besteht in keinem Betriebszustand, daher arbeitet das Ventil ohne zusätzliche Verluste durch abfließendes Vorsteueröl. Die Leckage reduziert sich daher auf die an den Ringspalten der Umfangsflächen beider Kolben auftretende Schieberleckage.

Bei dem erfindungsgemäßen Proportional-Druckregelventil handelt es sich um ein solches, welches speziell für Kupplungsanwendungen vorteilhaft ist. Bei den dahingehenden Anwendungen sind die Hauptforderungen nach hoher Dynamik und niedrigen Druckverlusten gegeben, um einen schnellen Befüllungsvorgang mit Öl und eine schnelle Entleerung der Kupplung gewährleisten zu können. Dies wird mit der vorliegenden Ventilgestaltung ohne weiteres erreicht, wobei darüber hinaus das erfindungsgemäße Ventil komplett entlastet werden kann, das heißt bei Wegnahme des elektrischen Steuersignals am Magnetsystem 28 wird der geregelte Druck am Nutzanschluss A auf den Druckwert von 0 bar gebracht. Bei den sonst herkömmlich vorgesteuerten Druckventilen wird die dahingehende Hauptstufe (Regelkolben) mit einer eingespannten Druckfeder auf seine Endlage rückgeführt, so dass die bekannten Ventile immer ein Druckniveau bei nicht vorhandenem elektrischen Steuersignal am Magnetsystem aufweisen, welches der Kraft der eingespannten Feder entspricht. Letzteres führt dann zu Problemen beim Entkuppeln von hydraulisch arbeitenden Kupplungen.

Um dies zu verdeutlichen, wird die Anwendung des erfindungsgemäßen Proportional-Druckregelventiles unter Bezugnahme auf die Fig. 7 und 8 bei einer hydraulisch arbeitenden Kupplung näher erläutert, wobei gemäß der Darstellung und der Fig. 7 das Proportional-Druckregelventil zwischen den Kupplungsteilen 72, 74, 76 und der Hydropumpe 16 geschaltet ist.

Kupplungen dienen unter anderem zur Verbindung von zwei Wellen, beispielsweise der Wellen von Arbeitsmaschinen mit Transmissionswellen. Bei der dahingehenden hydraulischen Kupplung wird durch das Betätigen des erfindungsgemäßen Proportional-Druckregelventiles ein Zylinderraum 72 mit der Druckleitung bzw. dem Druckanschluss P der Hydropumpe 16 verbunden. Hierbei drückt der federbelastete Kolben 74 ein nicht näher dargestelltes Lamellenpaket der Kupplung zusammen. Durch Umschalten des Proportional-Druckventiles entleert sich dann der Zylinderraum 72, und die Druckfederanordnung 76 schiebt gemäß der Darstellung nach der Fig. 7 den Kolben 74 in seine Ausgangslage zurück. Hierbei wird das verbleibende Hydraulikmedium über den Nutzanschluss A in Richtung zum Tank T hin ausgeschoben.

Die Darstellung gemäß der Fig. 8 zeigt nun den Ablauf eines Kupplungsspieles. Zunächst muss die Kupplung schnell mit Öl (Hydraulikmedium) befüllt werden. Dies geschieht im Zeitraum t₁ bis t₂, wobei der Kolben 74 gerade damit beginnt das Lamellenpaket der Kupplung zu komprimieren. Dieser Vorgang geht mit einem kurzzeitigen sehr hohen Volumenstrom einher. Danach wird dieser Zustand im Zeitraum von t₂ bis t₃ gehalten und im Zeitraum t₃ bis t₄ wird langsam "angefahren", indem der Druck durch das erfindungsgemäße Proportional-Druckregelventil langsam linear gesteigert wird, so dass dergestalt die Kraft von der Arbeitsmaschine gleichmäßig an den Transmissionsstrang übertragen wird. Beim Zeitpunkt t₅ wird durch das Zurückfahren des elektrischen Steuersignals am Magnetsystem 28 der Druck in der Kupplung zurückgenommen, so dass das komprimierte Lamellenpaket unter zusätzlicher Einwirkung der Druckfederanordnung 76 den Kolben 74 wieder in seine Ausgangslage zurückschieben kann, was ohne weiteres möglich ist, da in der dahingehenden Schaltstellung wie bereits aufgezeigt, der Druckwert am Anschluss A den Wert 0 aufweist.

## Patentansprüche

1. Proportional-Druckregelventil mit einem Ventilgehäuse (10), das mindestens drei fluidführende Anschlüsse aufweist, insbesondere in Form eines Pumpen(P)-, eines Nutz(A)- und eines Tank(T)-Anschlusses, wobei innerhalb des Ventilgehäuses (10) zum wahlweisen Verbinden des Pumpenanschlusses (P) mit dem Nutzanschluss (A) sowie des Nutzanschlusses (A) mit dem Tankanschluss (T) ein Regelkolben (18) längsverfahrbar geführt ist, wobei eine fluidführende Verbindung zwischen dem Pumpenanschluss (P) und einer Vorsteuerkammer (20) eines Vorsteuerventils (22) vorhanden ist, wobei das Vorsteuerventil (22) von einem Magnetsystem, insbesondere einem Proportional-Magnetsystem (28), von einer nicht geschlossenen in eine geschlossene Stellung und umgekehrt ansteuerbar ist, und wobei die fluidführende Verbindung (27, 29, 33, 31) zur Vorsteuerkammer (20) eine innerhalb der Wand des Ventilgehäuses (10) in axialer Richtung verlaufende Bohrung (27) aufweist, **dadurch gekennzeichnet, dass** die in axialer Richtung verlaufende Bohrung(27) von einer den Pumpenanschluss (P) bildenden Radialbohrung (9) des Gehäuses (10) ausgeht und dass das über die fluidführende Verbindung (27, 29, 31, 33) zugeführte Fluid über einen Verteilerraum (19) im Ventilgehäuse (10) zur Tankseite abströmen kann.

2. Proportional-Druckregelventil nach Anspruch 1, **dadurch gekennzeichnet, dass** der Nutzanschluss (A) durch die koaxiale, endseitige Öffnung (35) des Ventilgehäuses (10) gebildet ist.

3. Proportional-Druckregelventil nach Anspruch 1 oder 2, **dadurch gekennzeichnet, dass** der Regelkolben (18) als bewegbare Begrenzung der Vorsteuerkammer (20) eine in einer Radialebene liegende, geschlossene, ebene Kolbenfläche besitzt.

4. Proportional-Druckregelventil nach Anspruch 3, **dadurch gekennzeichnet, dass** ein im Ventilgehäuse (10) stationär angeordneter Ventilkörper (42) des Vorsteuerventils (22) eine weitere, feststehende Begrenzung der Vorsteuerkammer (20) sowie den vom Pumpenanschluss (P) entfernten Endabschnitt der fluidführenden Verbindung zur Vorsteuerkammer (20) bildet.

5. Proportional-Druckregelventil nach Anspruch 4, **dadurch gekennzeichnet, dass** der Endabschnitt der fluidführenden Verbindung einen radialen Kanal (31) beinhaltet, der sich zwischen einer inneren, koaxialen Bohrung (11) des Ventilkörpers (42) und einem Ringspalt (29) erstreckt, der zwischen der Umfangsfläche des Ventilkörpers (42) und dem Ventilgehäuse (10) einen Filtrationsspalt bildet, in den das Ende der axialen Bohrung (27) des Ventilgehäuses (10) mündet.

6. Proportional-Druckregelventil nach Anspruch 4 oder 5, **dadurch gekennzeichnet, dass** im Ventilgehäuse (10) ein Verteilerraum (19) vorhanden ist, der an das von der Vorsteuerkammer (20) abgekehrte Ende des Ventilkörpers (42) angrenzt, mit dem Tankanschluss (T) verbunden ist und das Vorsteuerventil (22) durchströmendes Fluid aufnimmt.

7. Proportional-Druckregelventil nach einem der Ansprüche 4 bis 6, **dadurch gekennzeichnet, dass** an dem von der Vorsteuerkammer (20) abgekehrten Rand der inneren Bohrung (11) des Ventilkörpers ein Sitz (13) für ein bewegbares Schließelement (40) gebildet ist, das durch eine Vorsteuerfeder (21) zur Anlage am Sitz (13) vorgespannt ist.

8. Proportional-Druckregelventil nach einem der Ansprüche 5 bis 7, **dadurch gekennzeichnet, dass** der radiale Kanal (31) des Ventilkörpers (42) über eine Blende (33) in die innere, koaxiale Bohrung (11) mündet.

9. Proportional-Druckregelventil nach Anspruch 8, **dadurch gekennzeichnet, dass** die koaxiale innere Bohrung (11) des Ventilkörpers (42) über eine Dämpfungsblende (23) mit der Vorsteuerkammer (20) verbunden ist.

10. Proportional-Druckregelventil nach einem der Ansprüche 4 bis 6, **dadurch gekennzeichnet, dass** in der inneren koaxialen Bohrung (11) des Ventilkörpers (42) ein Vorsteuerkolben (38) axial verschiebbar ist, der einen einstellbaren Druckregler für die Vorsteuerkammer (20) bildet.

11. Proportional-Druckregelventil nach einem der Ansprüche 1 bis 10, **dadurch gekennzeichnet, dass** an dem der Vorsteuerkammer (20) abgekehrten Ende des Regelkolbens (18) ein Kraftspeicher, insbesondere in Form einer Feder (64), angreift und den Regelkolben (18) in Richtung zur Vorsteuerkammer (20) zu schieben sucht.

12. Verwendung eines Proportional-Druckregelventils nach einem der Ansprüche 1 bis 11 für hydraulisch betätigbare Kupplungen, **dadurch gekennzeichnet, dass** zum Zusammendrücken eines Lamellenpaketes der Kupplung ein Zylinderraum (72) der jeweiligen Kupplung mit einer Hydropumpe (16) über das Proportional-Druckregelventil zu verbinden ist.

## Claims

1. A proportional pressure control valve comprising a valve housing (10) which has at least three fluid-conveying connections, particularly in the form of a pump connection (P), a user connection (A) and a tank connection (T), a control piston (18) being guided with longitudinal displaceability within the valve housing (10) for optional connection of the pump connection (P) to the user connection (A) and of the user connection (A) to the tank connection (T), there being a fluid-conveying connection between the pump connection (P) and a pilot chamber (20) of a pilot valve (22), the pilot valve (22) being switchable by means of a magnet system, in particular a proportional magnet system (28), from a non-closed into a closed position and vice versa, and the fluid-conveying connection (27, 29, 33, 31) to the pilot chamber (20) having a bore hole (27) running in the axial direction within the wall of the valve housing (10), **characterised in that** the bore hole (27) running in the axial direction passes out from a radial bore hole (9) of the housing (10) forming the pump connection (P), and that the fluid supplied via the fluid-conveying connection (27, 29, 31, 33) can drain off via a distributor chamber (19) in the valve housing (10) towards the tank side.

2. The proportional pressure control valve according to Claim 1, **characterised in that** the user connection (A) is formed by the coaxial, end-side opening (35) of the valve housing (10).

3. The proportional pressure control valve according to Claim 1 or 2, **characterised in that** the control piston (18) has, as a moveable boundary of the pilot chamber (20), a closed, planar piston surface which lies in one radial plane.

4. The proportional pressure control valve according to Claim 3, **characterised in that** a valve body (42) of the pilot valve (22), which body is located stationarily in the valve housing (10), forms a further, stationary boundary of the pilot chamber (20) and the end section of the fluid-conveying connection to the pilot chamber (20), which section is remote from the pump connection (P).

5. The proportional pressure control valve according to Claim 4, **characterised in that** the end section of the fluid-conveying connection contains a radial channel (31) which extends between an inner coaxial bore hole (11) of the valve body (42) and an annular gap (29) which, between the peripheral surface of the valve body (42) and the valve housing (10), forms a filtration gap into which the end of the axial bore hole (27) of the valve housing discharges (10).

6. The proportional pressure control valve according to Claim 4 or 5, **characterised in that** in the valve housing (10) there is a distributor chamber (19) which borders the end of the valve body (42) which faces away from the pilot chamber (20), is connected to the tank connection (T) and accommodates the fluid flowing through the pilot valve (22).

7. The proportional pressure control valve according to any of Claims 4 to 6, **characterised in that** on the edge of the inner bore hole (11) of the valve body, which edge faces away from the pilot chamber (20), a seat (13) is formed for a moveable closing element (40) which is pretensioned by a pilot spring (21) into contact with the seat (13).

8. The proportional pressure control valve according to any of Claims 5 to 7, **characterised in that** the radial channel (31) of the valve body (42) discharges via an orifice (33) into the inner coaxial bore hole (11).

9. The proportional pressure control valve according to Claim 8, **characterised in that** the coaxial inner bore hole (11) of the valve body (42) is connected via a damping orifice (23) to the pilot chamber (20).

10. The proportional pressure control valve according to any of Claims 4 to 6, **characterised in that** in the inner coaxial bore hole (11) of the valve body (42) a pilot piston (38) can be axially moved and forms an adjustable pressure regulator for the pilot chamber (20).

11. The proportional pressure control valve according to any of Claims 1 to 10, **characterised in that** an energy storage mechanism, in particular in the form of a spring (64), acts on the end of the control piston (18) facing away from the pilot chamber (20) and tries to move the control piston (18) in the direction toward the pilot chamber (20).

12. The use of a proportional pressure control valve according to any of Claims 1 to 11 for hydraulically actuatable clutches, **characterised in that** a cylinder chamber (72) of the respective clutch is to be connected to a hydraulic pump (16) via the proportional pressure control valve to compress a disc pack of the clutch.

## Revendications

1. Vanne proportionnelle de régulation de la pression, comprenant une enveloppe (10) de vanne, qui a au moins trois raccords fluidiques, notamment sous la forme d'un raccord de pompe (P), d'un raccord utile (A) et d'un raccord de cuve (T), dans laquelle, à l'intérieur de l'enveloppe (10) de vanne, un piston (18) de réglage est, pour la liaison au choix du raccord de pompe (P) au raccord utile (A), ainsi que du raccord utile (A) au raccord de cuve (T), guidé de manière à pouvoir se déplacer longitudinalement, une liaison fluidique entre le raccord de pompe (P) et une chambre (20) de pilotage d'une vanne (22) pilote étant présente, la vanne (22) pilote pouvant être commandée par un système magnétique, notamment par un système (28) magnétique proportionnel, pour passer d'une position non fermée à une position fermée et inversement, et dans laquelle la liaison (27, 29, 33, 31) fluidique menant à la chambre (20) de pilotage a un trou (27) s'étendant dans la direction axiale dans la paroi de l'enveloppe (10) de vanne, **caractérisée en ce que** le trou (27) s'étendant dans la direction axiale part d'un trou (9) radial de l'enveloppe (10) formant le raccord de pompe (P) et **en ce que** le fluide apporté par la liaison (27, 29, 31, 33) fluidique peut s'écouler vers le côté cuve par un espace (19) répartiteur dans l'enveloppe (10) de vanne.

2. Vanne proportionnelle de régulation de la pression suivant la revendication 1, **caractérisée en ce que** le raccord utile (A) est formé par l'ouverture (35) coaxiale du côté de l'extrémité de l'enveloppe (10) de vanne.

3. Vanne proportionnelle de régulation de la pression suivant la revendication 1 ou 2, **caractérisée en ce que** le piston (18) de réglage a, comme limitation mobile de la chambre (20) de pilotage, une surface de piston plane, fermée et se trouvant dans un plan radial.

4. Vanne proportionnelle de régulation de la pression suivant la revendication 3, **caractérisée en ce qu'**un corps (42) de la vanne (22) de pilotage, monté fixe dans l'enveloppe (10) de vanne, ferme une autre limitation fixe de la chambre (20) de pilotage, ainsi que le tronçon d'extrémité, éloigné du raccord de pompe (P), de la liaison fluidique menant à la chambre (20) de pilotage.

5. Vanne proportionnelle de régulation de la pression suivant la revendication 4, **caractérisée en ce que** le tronçon d'extrémité de la liaison fluidique comporte un canal (31) radial, qui s'étend entre un trou (11) intérieur coaxial du corps (42) de vanne et une fente (29) annulaire, qui forme, entre la surface périphérique du corps (42) de vanne et l'enveloppe (10) de vanne, une fente de filtration, dans laquelle débouche l'extrémité du trou (27) axial de l'enveloppe (10) de vanne.

6. Vanne proportionnelle de régulation de la pression suivant la revendication 4 ou 5, **caractérisée en ce que**, dans l'enveloppe (10) de vanne, il y a un espace (19) formant répartiteur, qui est voisin de l'extrémité, éloignée de la chambre (20) de pilotage, du corps (42) de vanne, qui est relié au corps de cuve (T) et qui reçoit le fluide passant dans la vanne (22) pilote.

7. Vanne proportionnelle de régulation de la pression suivant l'une des revendications 4 à 6, **caractérisée en ce que**, sur le bord éloigné de la chambre (20) de pilotage du trou (11) intérieur du corps de vanne, est formé un siège (13) pour un élément (40) mobile de fermeture, qui est précontraint de manière à s'appliquer au siège (13) par un ressort (21) pilote.

8. Vanne proportionnelle de régulation de la pression suivant l'une des revendications 5 à 7, **caractérisée en ce que** le canal (31) radial du corps (42) de vanne débouche par un diaphragme (33) dans le trou (11) intérieur coaxial.

9. Vanne proportionnelle de régulation de la pression suivant la revendication 8, **caractérisée en ce que** le trou (11) intérieur coaxial du corps (42) de vanne est relié à la chambre (20) de pilotage par un diaphragme (23) d'amortissement.

10. Vanne proportionnelle de régulation de la pression suivant l'une des revendications 4 à 6, **caractérisée en ce que**, dans le trou (11) intérieur coaxial du corps (42) de vanne, peut coulisser axialement un piston (28) pilote, qui forme un régulateur de pression réglable pour la chambre (20) de pilotage.

11. Vanne proportionnelle de régulation de la pression suivant l'une des revendications 1 à 10, **caractérisée en ce que** la chambre (20) de pilotage est, du côté éloigné du piston (18) de réglage, attaquée par un accumulateur de force, notamment sous la forme d'un ressort (64) et le piston (18) de réglage tend à coulisser en direction de la chambre (20) de pilotage.

12. Utilisation d'une vanne proportionnelle de régulation de la pression suivant l'une des revendications 1 à 13, pour un accouplement actionnable hydrauliquement, **caractérisée en ce que**, pour la compression d'un paquet de lamelles de l'accouplement, un espace (72) de cylindre de l'accouplement respectif peut être relié à une pompe (16) hydraulique par la vanne proportionnelle de régulation de la pression.
